# EUROPEAN PATENT SPECIFICATION

(11) **EP 4 106 974 B1**
(45) Date of publication and mention of the grant of the patent: **03.09.2025**
(21) Application number: 21706244.7
(22) Date of filing: 16.02.2021
(51) Int. Cl.: B29C 57/04, B29C 57/12

(54) **APPARATUS FOR CREATING A ROLLED BACK END**
VORRICHTUNG ZUM ERZEUGEN EINES ZURÜCKGEROLLTEN ENDES
APPAREIL DE CRÉATION D'UNE EXTRÉMITÉ ROULÉE

(30) Priority: 17.02.2020 GB 202002134
(43) Date of publication of application: 28.12.2022
(73) Proprietor: Bio Optimal Limited, Eastleigh, Hampshire SO50 9DR (GB)
(72) Inventor: WATSON, Hugh John, Hampshire PO10 7TE (GB)
(74) Representative: Schlich
(86) International application number: PCT/EP2021/053779
(87) International publication number: WO 2021/165263

(56) References cited:
- JP-A- H04 224 926
- US-A- 3 563 573

## Description

### Introduction

The present invention relates to apparatus for rolling back the end of a flexible tube, and a method of creating a seal between two such rolled back ends.

### Background to the Invention

In the medical, pharmaceutical, cosmetics and personal care industries single use apparatus, or bio-disposable systems, are used in the batch preparation of many products. Similar systems are also used in the milk production system, in brewing and beverage production, and in the homecare industries, in the electronics industry, the food industry and the medical industry generally. While known as single use apparatus, some systems are designed not for small batch production, but for semi-permanent or even essentially permanent installation.

Single use apparatus includes flexible tubing, which is typically made from silicone, but may be made from other plastic materials, such as thermoplastics. Connection to other tubes or pieces of apparatus required in the production process are commonly made with flanged connectors which are clamped to each other, with a rubber gasket positioned between the flanges creating a seal. The flanged connectors include a hollow, usually barbed, spigot over which the flexible tube is placed in a fluid tight manner. This standard system is known as the tri-clover system. Initially the tri-clover system was developed for connection of multi-use components made from metal, typically stainless steel. However, more recently it was adapted for use with single use, bio-disposable systems using plastic materials or the like which can be sterilized by radiation, ethylene oxide or steam. However, other clamping devices are also used, including those that are secured by cable ties, quick connect systems, threaded systems and other connecting systems, or combinations of all systems.

Importantly, fluid passing through such a connection will come into contact not only with the tubes, but also the flange connectors and the gasket. These will typically be made from different materials, and in order to comply with regulations it will be necessary to carry out testing for bio-compatibility of the production line with each of the at least three different materials. If there is an alteration to the production process, for example a change in temperature or raw material, it may be necessary to repeat such testing on all of the at least three materials again.

More permanent systems may use similar apparatus, connected by flexible tubing clamped together. However, they also use semi-flexible or even rigid tubing that may be connected together using butt welding. This technique is difficult to use and very time consuming. Due to the nature of the liquids, solutions and fluids passing through the tubing, high grade materials must be used and sterility achieved. Even then such welds have a relatively short life-span.

There are various reasons for connecting two pieces of tube together. These may include a change in the diameter of the tube to adjust the flow or provide the correct size for entry into another element of the system, such as a mixer or a filter.

WO 2020/182906, in the name of Bio Optimal Limited, describes a system for connecting two flexible tubes, in which the ends of the tubes are rolled back over themselves, and two rolled back ends are urged together to form a seal.

Flexible tubing is tubing which can be bent but absent any continuing force it will generally return to its original shape. This feature is known in the industry as having "memory", i.e., of the shape into which it was originally formed, and to which it will return. In addition, flexible tubing has elasticity which allows it to bend and deform, without being damaged, and spring back into shape. In order to support the rolled back ends WO 2020/182906 describes a tubing support and a sleeve, which together hold the rolled back end between them, ensuring that the rolled back end cannot revert to a straight, unrolled back, tube. Such fittings are not essential to create a stable rolled back end. Nevertheless, they are advantageous for supporting such a rolled back end, and providing attachments or abutments for any connecting fittings, such as a clamp.

Flexible tubes are resistant to having their ends rolled backed, and due to the strength of the material and diameter of the ends, this can be a difficult process to achieve by hand. Once a rolled back end has been achieved, if the length of the roll back is short, typically less that the outside diameter of the tube, absent any retaining means, the tube will spring back into its unrolled state. However, if the roll back is of sufficient length, typically longer than the outside diameter of the tube, the elasticity and memory in the tube tends to prevent the flexing of the material that would be required to unroll the tube. Significantly less force would be required to unroll the tube, and this would be assisted by the memory and elasticity of the tube as the roll back was reduced in length or otherwise unrolled, and thus support and protection of a rolled back end is advantageous.

JP H04 224926, in the name of Adobansu Denki Kougiyou KK, describes apparatus for forming a rolled back end in a length of plastic tubing having no memory, namely plastic tubing that will remain in a position into which it has been manipulated. The apparatus comprises an element from holding the tube, an element for entering the end of the tube and creating a flare, and a further element for pushing the flared end back on itself to create a roll back. When the tube is removed from the apparatus, due to the nature of the material of the tube, the tube remains in the rolled back position. This apparatus is effective for plastic tubes with no memory but could not be effective for plastic tubes with memory, as once the tube, with memory, was removed from the apparatus, it would revert to its original form, and thus unroll.

There is therefore a need for a device to assist with the rolling back of the tube end, and with positioning and fitting of the tubing support and sleeve on the tube.

### Summary of the Invention

According to the invention there is provided apparatus for rolling back the end of a tube, the apparatus comprising;
means for retaining a tube; and
means for rolling back the end of the tube, the means being aligned with the means for retaining the tube, comprising:
   a plunger having a conical end, a tip of the conical end being at a distal end of the plunger and flaring to a diameter that is the same or larger than that of the internal diameter of the tube,
characterised in that the retaining means further comprises:
   a cover extending over the plunger and moveable with and separately to the plunger; and
   means for advancing the plunger and cover towards the tube;
wherein the cover is provided with an indent on its inner surface, sized to attach a sleeve, the sleeve being sized to fit over a rolled back end of the tube, securing the same;
further characterised in that the tube is a flexible tube.

In use a flexible tube is placed into the means for retaining the flexible tube, and its end is placed adjacent to the tip of the conical end or cone, the tip generally having a diameter equal to or less than that of the internal diameter of the tube. While the tube is held in position, plunger and its conical end are advanced into the tube, with the cover also advancing level with or spaced slightly back from the flare of the conical end. The movement of the plunger causes the conical end to be pushed into the tube so that the end of the tube is pushed outwardly and flares around the cone and past the end of the conical end so that it projects beyond the outer edge of the conical end. Forward movement of the conical end is limited to substantially the length of the roll back required. At that point the conical end stops advancing but the cover continues to advance. The forward movement of the cover pushes against the projecting, flared end of the tubes causing it to flip back over itself, thus forming the rolled back end.

Typically, the retaining means will be a clamp capable of holding and securing the flexible tube, while not damaging it.

Advantageously, the conical end of the plunger assembly and the cover may be replaceable by alternatives of different sizes. Thus, cones and covers of an appropriate size for the flexible tube can be provided on the apparatus. Alternatively, the apparatus can be provided in a variety of sizes suitable for flexible tubes of different diameter.

In an initial position a distal end of the cover is suitably level with the flared end of the conical end, or slightly set back therefrom, but movable to a position extending beyond the tip of the cone. Providing the end of the cover slightly set back from the conical portion of the plunger may facilitate flaring the tube end before it is rolled back on itself.

The exact shape of the conical end is not critical. The cone tip is generally truncated, though small enough in diameter to fit inside the open tube end without difficulty. It does not need to be sharp pointed. Suitably, the cone flares outwardly with increasing flare from its tip to its widest point where it meets the rest of the plunger. For example, the flare may be partially elliptical or oval in cross-section. An increasing flare is found to assist in turning the flared end of the tube that projects beyond the plunger towards the perpendicular so that the projected end can be caught by the cover (or sleeve, as described below) so as to roll back the tube end.

The conical end of the plunger (and hence the plunger at that point) may have an outer diameter approximately the same as or slightly greater than the outer tube diameter. If of greater diameter than the tube this can assist turning the flared tube ready to be rolled back on itself. The conical end may be at least 0.5mm, 1mm, 2mm or even 3mm greater in diameter than the tube (referring to its external diameter); preferably it is at least 1mm greater in diameter.

As shown in embodiments below, the conical end may be sized such that the majority of its length can fit inside the flexible tube. Thus, the length of the tube may be the inside diameter of the tube plus approximately 10 - 30%, preferably 10 - 20% and more preferably 10 - 15%.

The cover typically surrounds the plunger, and both are typically substantially circular in cross-section. Suitably, and as shown in embodiments below, the cover is an open cylinder, thus in the form of a ring that surrounds and is co-axial with the plunger. The apparatus can push the cover independently of the plunger to engage the projecting tube end and roll it back on itself.

Usually, the apparatus is also adapted for fitting a tubing support, in addition to the sleeve, to the tube to support the rolled back end. The end product is a tube with a rolled back end on a tube support with the rolled back end held against the tube support by the sleeve. Going outwardly from the inside of the tube, in cross-section this product has the tube, surrounded by the tube support surrounded by the rolled back end surrounded by the sleeve. The indent ensures that forward motion of the cover causes movement of the sleeve and it is the sleeve that engages the projecting, flared tube end and urges it back on itself.

In use, a sleeve is placed into the indent in the inner surface of the cover, and the tube is placed into the tube support and over the end of the cone, with the end of the tube support abutting the tube retaining means and retaining the end of the flexible tube. As the cone advances it flares the end of the tube outwards from the end of the cone. Once the cone is fully urged into the tube, so that the flare end projects beyond the outer diameter of the plunger, there is no more forward movement of the plunger but the cover continues to move forwards, bringing the sleeve with it, engaging the projecting, flared tube end, rolling back the tube end and then urging the sleeve over the rolled back end of the tube to hold it in that position.

Usually, the tube will be provided with a tubing support which is placed around the end of the tube, and set back from the end of the tube by substantially the length of the roll back.

Suitable tubing supports are usually provided with a lip, which defines the length of the rolled back end. Advantageously the lip can be provided with an indentation and the sleeve can be provided with a projection which fits into the indentation. The apparatus moves the sleeve forward to a sufficient extent to engage the projection in the indentation, thus engaging the tubing support and sleeve and confirming correct fitting. Alternatively, the indentation may be provided on the sleeve and the projection on the tubing support, again the apparatus moving the sleeve forward such that there is engagement between the indentation and projection. Usually, the indentation and projection will be continuous around the circumferences of the tube supporting and the sleeve. However, either the projection or both the indentation and projection may be discontinuous.

Usually, the means for clamping the flexible tube, and the means for rolling back the end of the tube are fixed onto a base.

The means for advancing the cone, plunger and cover may be manually operational, or may be automated, for example electrically driven.

The size or length of the roll back is determined by length of the tube extending from the end of the tubing support, where provided, extending from the tube clamping means, or by the forward movement of the cone on the plunger.

Preferably, the length of the roll back formed is substantially the same as the external deadline of the flexible tube, for example 80 - 120% of the external diameter of the flexible tube, preferably 85 - 115% of the external diameter, and most preferably 90 - 110% of the external diameter of the flexible tube. Advantageously, the roll back formed may be 95 - 105% of the external diameter of the tube.

Where the tubing support is provided, the tube will extend beyond the tubing support by typically a length substantially equivalent to the external diameter of the tube, for example 80 - 120% of the external diameter, preferably 85 - 115% of the external diameter, and most preferably 90 - 110% of the external diameter. Most usually the tube will extend beyond the end of the tubing support by a length equivalent to 95 - 105% of the external diameter of the tube. This will also be substantially the length of the tubing support, or the distance between the end of the tubing support and the lip.

The length of the roll back is not critical for the working of the invention. As discussed above, the tube will be a flexible tube, having elasticity and memory. If such a tube is rolled back the nature of the tube will urge the tube to un-roll back to its original shape. However, once a certain length of the tube has been rolled back, the shape of the tube in the rolled back position is essentially that in an unrolled position and this will prevent the tube from unrolling. This length will be dependent on the exact nature of the tube, the material from which it is made, and its flexibility and memory. Typically, this length will be approximately the external diameter of the tube but will also depend on the material from which the tube is made and the thickness thereof. For tubes currently in use, it is as noted approximately the external diameter of the tube.

According to a second aspect of the invention, there is provided a kit comprising the apparatus of the first aspect, together with a plurality of sleeves, sized for an interference fit with a length of rolled back end.

Preferably the kit may also include a plurality of tubbing supports, the tubing support sized for an interference fit over a flexible tube (that has not been rolled back). Usually, the tubing support also includes a lip extending perpendicular from the end of the support away from the flexible tube.

Advantageous, the sleeve and the tubing support are provided with engaging elements to enable them to the connected together. Preferably the engaging elements are adjacent the ends of the respective tubing support and sleeve that if away from the rolled back end. Typically, the engaging elements comprise one or more projections on one of the tubing support or sleeve, and one or more corresponding indentations in the other of the tubing support or sleeve. Preferably the tubing support is provided with one or more indentations and the sleeve is provided with one or more corresponding projections.

In accordance with a third aspect there is provided a method of providing a rolled back end of a tube, the method comprising the steps of:
supporting a length of the tube,
inserting a conical portion into the end of the tube, until the tube extends beyond the conical portion, creating a flared end, and
characterised in that the method further comprises supporting the rolled back end with a sleeve by
pushing the flared end back on itself using the sleeve held by a cover extending over the flared conical portion, resulting in a rolled back end of a tube supported by the sleeve;
and wherein the tube is a flexible tube.

The method may be accomplished using the apparatus of the first aspect or the kit of the second aspect.

Usually, the method will include the additional step of:
initially fitting a tubing support adjacent the end of the flexible tube, spaced from the end by the length of tubing to be rolled back.

This will result in the step of pushing the flared end back on itself pushing the end of the tube back over the tubing support, and pushing of the sleeve over the rolled back end over the tubing support.

Preferably, the tubing support and sleeve are provided with formations for engagement, so that the step of pushing the flared end back on itself using the sleeve may also include:
pushing the sleeve over the rolled back end to engage with the tubing support.

Usually, the tubing support will comprise a spigot sized to fit over the flexible tubing. Preferably the tubing support and the sleeve are adapted to be connectable together. Advantageously, the tubing support may be provided with a lip extending substantially perpendicular outwards from the spigot. This can be used to connect the tubing support and sleeve and also provides a stop or measure for the length of the roll back.

In use the tubing support is positioned over the flexible tube and set back from the end of the tube by the distance substantially equal to the roll back required. The cone is then urged into the tube flaring it back by the distance extending from the end of the spigot. The cover may then be used to urge the sleeve over the rolled back end.

Advantageously, the cover may be provided with an internal cut away to accommodate the sleeve.

### Detailed Description of the Invention

To help understanding of the invention, specific embodiments thereof will now be described by way of example and with reference to the accompanying drawings, in which:
Figure 1 is a perspective view of the apparatus according to the invention, with the lid of the means for supporting the flexible tube open;
Figure 2 is a perspective view of the apparatus of Figure 1, which the lid of the means for supporting the flexible tube closed;
Figure 3 is a cross-sectional view of the apparatus of Figure 1, holding a flexible tube with tubing support, and a sleeve;
Figure 4 is a cross-sectional view of the apparatus of Figure 4, with the plunger advanced into the tube, the end of the tube flared, but not rolled back; and
Figure 5 is a cross-sectional view of the apparatus of Figure 3 in which the tube has been rolled back over the tubing support, and held with the sleeve, before removal from the apparatus.

### Example

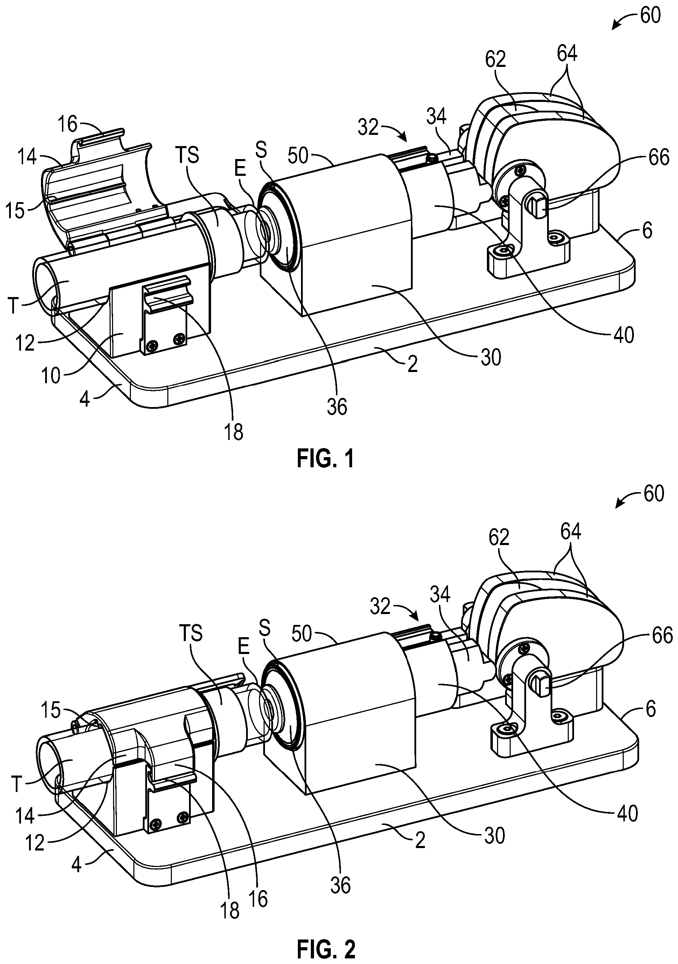

Referring initially to Figures 1 - 3 the apparatus 1 thereshown is designed to roll back an end E of a flexible tube T and to fit a tubing support TS and sleeve S, which support the rolled back end.

The apparatus comprises a base 2 to ensure that the elements are maintained at predetermined distances. This also enables transport of the apparatus.

Adjacent one end 4 of the base 2 is provided a flexible tubing retaining or clamping means, or tube holder 10. This is designed to hold a flexible tube T so that its end E can be rolled back. The tube holder 10 includes a channel 12 into which the tube can be placed, and an openable lid 14, which allows placement of the tube T, and which can be closed to hold the tube in position. The lid 14 is provided with a catch 16, which clips over a projection 18 on the channel 12. The tubing securing means is fixed onto the base 2 of the apparatus.

The channel 12 and lid 14 are provided with a series of lobes or projections 15, which once a tube T is placed into the channel 12 and the lid 14 is closed, press into the tube T deforming it, and preventing backwards or forwards movement of the tube in the tube holder 10.

The base 2 also holds the means 30 for rolling back the end E of the tube T, which includes a plunger assembly 32, including a plunger 34 having a flared conical portion 36 at its distal end. The conical portion 36 comprises the wider end of a cone only, the very tip of the cone not being present. Although in another embodiment, the tip may be present. The conical portion 36 is flared compared to a standard cone shape. The diameter of the plunger 34 is slightly larger than that of the outer diameter of the flexible tube T, with the conical portion 36 flaring to this diameter. The means 30 for rolling back the end of the tube T is aligned with the tube holder 10, such that forward movement of the plunger 34 is centred on the tube T.

The term "flaring" indicates that the increase in diameter of the cone is not linear, but more than linear.

Around the plunger is provided a cover 40 designed to have a sliding fit over the plunger 34. The sleeve 40 is provided with a cut-away portion or indent, 42 inside its proximal end 44, designed such that a sleeve S can be placed substantially within the indent. Before actuation, the end 44 of the cover is very slightly set back from the flared end of the conical portion 36. This enables the conical portion 36 to enter the tube T free from encumbrance by the cover 40.

The plunger assembly is generally made of a hard material such as a metal, for example aluminium. Alternatively, this could be made of a hard plastic material.

The plunger assembly is held on the base 2 by a plunger assembly housing 50, into which the plunger assembly has a sliding fit.

At the other end 6 of the base 2, and connected to the plunger assembly 34, is an actuator mechanism 60 for advancing the plunger assembly. As shown this mechanism 60 is a manually operated mechanism, although the movement of the plunger assembly could be automated using mechanisms and means well known in the art. As shown the mechanism comprises a cam surface 62 for advancing the plunger 32 and a separate cam surface 64 for advancing the cover 40. Advancing means 66 for rotation of the cam surfaces 62 and 64 is also provided, enabling one movement to advance both the plunger and the cover.

The cam surfaces 62 and 64 have identical starting surface portions 70. However, the cam surface 62 engages with the plunger 34 for movement of the conical portion 36, but cam surface 64 does not engage with the end 46 of the cover 40. Thus initially on movement of the handle 66 both cam surfaces move such that cam surface 62 moves the plunger 34, but movement of cam surface 64 does not move the cover 40. The cam surface 62 that moves the plunger then includes a portion 72 that essentially maintains the plunger in a fixed position, i.e. it simply follows the arc of a circle. The cam surface 64 that moves the cover 40 includes an equivalent portion 74 that initially engages with the end 46 of the cover 40, urging the cover 40 to move forwards. Both cam surfaces 62, 64 then include a stop portion 76, which is in effect the initial portion of the cam surface. These surfaces abut a stop portion 78 on the base, namely part of the actuation mechanism. Movement of the cam surfaces 62 and 64 is activated by movement of a handle 66 (not shown), which moves both surfaces simultaneously.

Movement of the cam surfaces 62, 64 is controlled by positioning a handle (not shown) on pin 66. Rotation of the handle rotates the pin 66, moving the cam surfaces against the end of the plunger 34 and sleeve.

In use, a user places a sleeve S into the cut-away portion 42 at the distal end 44 of the cover 40. The user then places a tubing support TS over the end of a flexible tube T, set back from the end E of the tube, by the distance of the roll-back desired, which will also be approximately the distance from the end of the spigot to the lip of the tubing support TS. The tube T is then placed in the tube holder 10, positioning it such that the tubing support TS and end of the flexible tube T extends from the flexible tubing securing means 10 in the direction of the plunger assembly 20. The lip of the tubing support TS will abut the end of the flexible tubing securing means 10, and it size prevents it from entering the flexible tubing securing means 10. It is also important to ensure that the end of the tube E is placed over the conical portion 36. Once the tube T is in position, the lid 14 is closed, and fastened with the catch 16. This is shown in Figure 1 - 3.

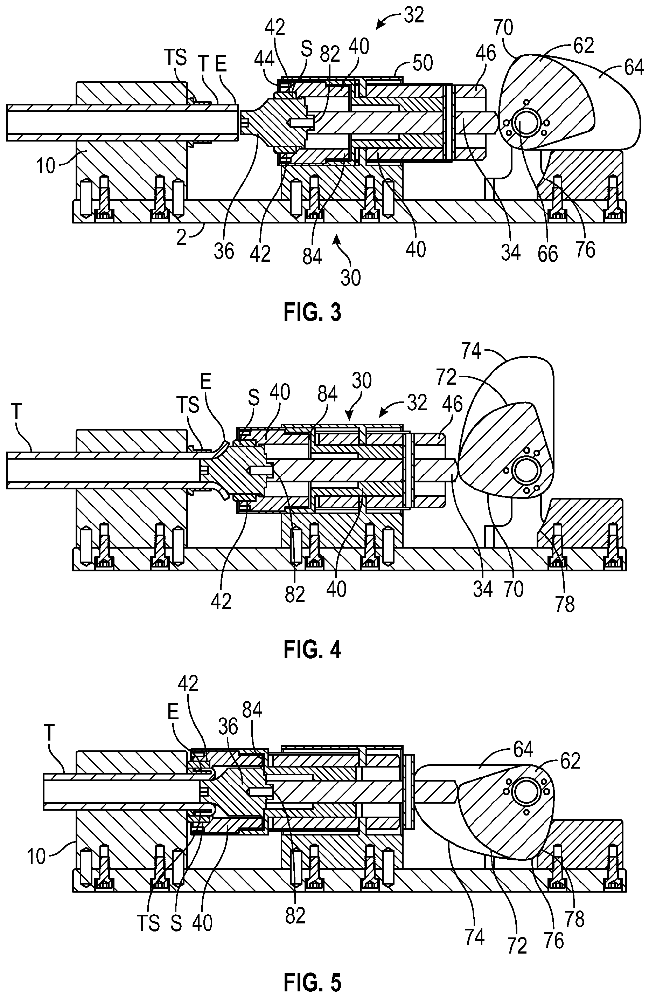

To actuate the rolling back of the end, the user will start to move the handle 66 of the actuator mechanism 60 which moves the cam surfaces 62, 64 against the end of the plunger and cover assembly moving them forward towards the flexible tube T. This is shown in Figure 4. Initially the conical portion 36 is forced into the flexible tube T, which flares the tube as it curves along the path of the conical portion 36. At this stage the cover 40 has moved the same distance as the plunger 34 and so it still positioned at the end of or slightly behind the conical portion 36. At the end of the forward movement of the plunger assembly the conical portion 36 has been urged almost fully into the flexible tube T such that the flexible tube has flared along the curvature of the conical portion and slightly over the end of the conical portion 36, and almost perpendicular to the length of the tube T. The flared portion of the flexible tube T extends from its end E to the edge of the tubing support TS. The edge of the tubing support TS prevents any further forward movement of the plunger and conical portion 36. In addition, the cam surface 62 is shaped such that the position of the plunger remains constant while the handle is further rotated.

Referring now to Figure 5, as the user continues to move the handle 66 the cam surface 62 ceases forward movement of the plunger, but cam surface 64 ensures continued forward movement of the collar 40, which is holding the sleeve S. The forward movement of the cover 40 pushes the flared end E of the tube T back on itself, creating the rolled back end R. The continued forward movement of the collar 40 urges the rolled back section of the tube T flat against the tubing support TS and urges the sleeve S over the rolled back end R. The sleeve S is urged over the rolled back end until it abuts the lip of the tubing support TS, and so that engagement between a projection and indentation in the sleeve S and tubing support TS, where provided, is achieved.

The handle is then returned to its rest position, retracting the collar 40 and plunger 34 from the flexible tube T. The retraction of the cover 40 leaves the sleeve S in position around the rolled back end E of the tube T.

Once the plunger assembly 30 has been retracted, the lid 14 of the tube holder 10 can be opened, and the tube T removed.

The tube will now be provided with a rolled back end which is supported by a tubing support TS and sleeve S and can be used to create a seal.

The tube holder 10 and its channel 12 will be provided at a size that is appropriate for the diameter of the flexible tube, as will the plunger assembly, plunger, conical portion and sleeve.

In some embodiments, not shown, the conical end 36 and the cover 40 may be removable. This can allow alternative conical end and cover combinations to be inserted of a suitable size for the tube whose end is to be rolled back. The conical end 36 can be removed at joint 82 and replaced by another conical end of the appropriate size. Equally the cover can be removed at joint 84 and replaced by one of an appropriate size. Where removable covers are provided, they may be provided with an end flange (not shown) to assist then being removed from the plunger assembly.

The apparatus, appropriately sized, can be used for rolling back the end of any diameter of flexible tube. However, typically a suitable tube will have a diameter of 1/8" (3.175mm) to 1" (25.4mm) diameter. Such tubes generally have a wall thickness of 1/8" (3.175mm) but may have a thickness between 1/16" (1.5875mm) and 3/16" (4.7625mm).

The length of the roll back will typically be 1/8" (3.175mm) - 3/4" (19.05mm), more typically 3/16" (4.7625mm) - ½" (12.7mm), and most typically ¼" (6.35mm) - 3/8" (9.525mm). Again, other lengths can be rolled back depending on the requirements of the user, and the tubing support TS and sleeve S if provided.

## Claims

1. Apparatus for rolling back the end (E) of a tube (T), the apparatus comprising:
means (10) for retaining a tube; and
means (30) for rolling back the end of the tube (T), the means being aligned with the means (10) for retaining the tube, comprising:
a plunger (34) having a conical end (36), a tip of the conical end being at the distal end of the plunger and flaring to a diameter that is the same or larger than that of the internal diameter of the tube,
**characterised in that** the means (30) for rolling back the end of the tube further comprises:
a cover (40) extending over the plunger (34) and movable with and separately to the plunger; and
means (60) for advancing the plunger and cover towards the tube,
wherein the cover (40) is provided with an indent (42) on its inner surface, sized to attach a sleeve (S), the sleeve (S) being sized to fit over a rolled back end of the tube (T), securing the same;
further **characterised in that** the tube is a flexible tube (T).

2. Apparatus according to claim 1, **characterised in that** prior to use, the cover (40) is positioned level with or slightly behind a proximal end of the conical end.

3. Apparatus according to claim 1 or claim 2, **characterised in that** the means (60) for advancing the plunger and cover towards the tube is adapted to initially move both components (30, 40) together, and then to move the cover (40) while retaining the position of the plunger with respect to the tube.

4. Apparatus according to any preceding claim, **characterised in that** the means (10) for retaining a flexible tube, and the means (30) for rolling back the end of the tube are fixed onto a base (2).

5. Apparatus according to any preceding claim, **characterised in that** the means (60) for advancing the conical end, plunger and cover is manually operated.

6. Apparatus according to any one of claims 1 - 4, **characterised in that** the means (60) for advancing the conical end, plunger and sleeve is automated.

7. Apparatus according to any preceding claim, **characterised in that** the conical end (36) of the plunger (34) assembly and the cover (40) are replaceable by alternatives of different sizes.

8. Apparatus according to any preceding claim, **characterised in that** the conical end (36) flares outwardly with increasing flare from its tip to its widest point where it meets a stem of the plunger.

9. Apparatus according to any preceding claim, **characterised in that** the cover is an open cylinder.

10. Apparatus according to any preceding claims, **characterised in that** the length of the roll back formed is 80 - 120% of the external diameter of the flexible tube.

11. A kit comprising the apparatus of any one of claims 1 - 10, together with a plurality of sleeves (S), sized for an interference fit with a length of rolled back end.

12. A method of providing a rolled back end of a tube (T), the method comprising the steps of:
supporting a length of the tube,
inserting a conical portion into the end of the tube, until the tube extends beyond the conical portion, creating a flared end,
**characterised in that** the method further comprises supporting the rolled back end with a sleeve (S) by
pushing the flared end back on itself using the sleeve held by a cover extending over the flared conical portion, resulting in a rolled back end of the tube supported by the sleeve;
and wherein the tube is a flexible tube (T).

13. A method according to claim 12, **characterised in that** it comprises an additional step of
initially fitting a tubing support (TS) adjacent the end of the flexible tube (T), spaced from the end by the length of tubing to be rolled back.

14. A method according to claim 13, **characterised in that in that** it further comprises a final step of
pushing the sleeve (S) over the rolled back end to engage with a tubing support (TS).

15. A method according to any one of claims 12 - 14 using the apparatus of any of claims 1 - 10.

## Patentansprüche

1. Vorrichtung zum Zurückrollen des Endes (E) eines Schlauches (T), wobei die Vorrichtung Folgendes umfasst:
ein Mittel (10) zum Halten eines Schlauches; und
ein Mittel (30) zum Zurückrollen des Endes des Schlauches (T), wobei das Mittel mit dem Mittel (10) zum Halten des Schlauches ausgerichtet ist, umfassend:
einen Kolben (34), der ein konisches Ende (36) aufweist, wobei sich eine Spitze des konischen Endes an dem distalen Ende des Kolbens befindet und sich auf einen Durchmesser aufweitet, der gleich dem Innendurchmesser des Schlauches oder größer als dieser ist,
**dadurch gekennzeichnet, dass** das Mittel (30) zum Zurückrollen des Endes des Schlauches ferner Folgendes umfasst:
eine Abdeckung (40), die sich über den Kolben (34) erstreckt und mit und separat zu dem Kolben bewegbar ist; und
ein Mittel (60) zum Vorschieben des Kolbens und der Abdeckung in Richtung des Schlauches,
wobei die Abdeckung (40) an ihrer Innenfläche mit einer Einbuchtung (42) bereitgestellt ist, die so bemessen ist, dass sie eine Hülse (S) befestigt, wobei die Hülse (S) so bemessen ist, dass sie über ein zurückgerolltes Ende des Schlauches (T) passt und dieses sichert;
ferner **dadurch gekennzeichnet, dass** der Schlauch ein flexibler Schlauch (T) ist.

2. Vorrichtung nach Anspruch 1, **dadurch gekennzeichnet, dass** die Abdeckung (40) vor der Verwendung auf gleicher Höhe wie ein proximales Ende des konischen Endes oder leicht hinter diesem positioniert ist.

3. Vorrichtung nach Anspruch 1 oder Anspruch 2, **dadurch gekennzeichnet, dass** das Mittel (60) zum Vorschieben des Kolbens und der Abdeckung in Richtung des Schlauches angepasst ist, um zunächst beide Komponenten (30, 40) zusammen zu bewegen und dann die Abdeckung (40) zu bewegen, während die Position des Kolbens in Bezug auf den Schlauch beibehalten wird.

4. Vorrichtung nach einem vorhergehenden Anspruch, **dadurch gekennzeichnet, dass** das Mittel (10) zum Halten eines flexiblen Schlauches und das Mittel (30) zum Zurückrollen des Endes des Schlauches an einer Basis (2) fixiert sind.

5. Vorrichtung nach einem vorhergehenden Anspruch, **dadurch gekennzeichnet, dass** das Mittel (60) zum Vorschieben des konischen Endes, des Kolbens und der Abdeckung manuell betätigt wird.

6. Vorrichtung nach einem der Ansprüche 1 - 4, **dadurch gekennzeichnet, dass** das Mittel (60) zum Vorschieben des konischen Endes, des Kolbens und der Hülse automatisiert ist.

7. Vorrichtung nach einem vorhergehenden Anspruch, **dadurch gekennzeichnet, dass** das konische Ende (36) der Baugruppe des Kolbens (34) und die Abdeckung (40) durch Alternativen unterschiedlicher Größe austauschbar sind.

8. Vorrichtung nach einem vorhergehenden Anspruch, **dadurch gekennzeichnet, dass** sich das konische Ende (36) mit zunehmender Aufweitung von seiner Spitze zu seiner breitesten Stelle, an der es auf einen Schaft des Kolbens trifft, nach außen aufweitet.

9. Vorrichtung nach einem vorhergehenden Anspruch, **dadurch gekennzeichnet, dass** die Abdeckung ein offener Zylinder ist.

10. Vorrichtung nach einem vorhergehenden Anspruch, **dadurch gekennzeichnet, dass** die Länge der gebildeten Zurückrollung 80 - 120 % des Außendurchmessers des flexiblen Schlauches ausmacht.

11. Kit, umfassend die Vorrichtung nach einem der Ansprüche 1 - 10, zusammen mit einer Vielzahl von Hülsen (S), die für eine Presspassung mit einer Länge eines zurückgerollten Endes bemessen sind.

12. Verfahren zum Bereitstellen eines zurückgerollten Endes eines Schlauches (T), wobei das Verfahren die folgenden Schritte umfasst:
Stützen einer Länge des Schlauches,
Einführen eines konischen Abschnitts in das Ende des Schlauches, bis sich der Schlauch über den konischen Abschnitt hinaus erstreckt, wodurch ein aufgeweitetes Ende entsteht,
**dadurch gekennzeichnet, dass** das Verfahren ferner Stützen des zurückgerollten Endes mit einer Hülse (S) umfasst durch
Zurückschieben des aufgeweiteten Endes auf sich selbst unter Verwendung der Hülse, die von einer Abdeckung gehalten wird, die sich über den aufgeweiteten konischen Abschnitt erstreckt, was zu einem zurückgerollten Ende des von der Hülse gestützten Schlauches führt;
und wobei der Schlauch ein flexibler Schlauch (T) ist.

13. Verfahren nach Anspruch 12, **dadurch gekennzeichnet, dass** es einen zusätzlichen Schritt umfasst zum
anfänglichen Anbringen einer Schlauchstütze (TS), die zu dem Ende des flexiblen Schlauches (T) benachbart und durch die Länge des zurückzurollenden Schlauches von dem Ende beabstandet ist.

14. Verfahren nach Anspruch 13, **dadurch gekennzeichnet, dass** es ferner einen abschließenden Schritt umfasst zum
Schieben der Hülse (S) über das aufgerollte Ende, um mit einer Schlauchstütze (TS) in Eingriff zu treten.

15. Verfahren nach einem der Ansprüche 12 - 14 unter Verwendung der Vorrichtung nach einem der Ansprüche 1 - 10.

## Revendications

1. Appareil destiné à rouler l'extrémité (E) d'un tube (T), l'appareil comprenant :
un moyen (10) destiné à retenir un tube ; et
un moyen (30) destiné à rouler l'extrémité du tube (T), le moyen étant aligné avec le moyen (10) destiné à retenir le tube, comprenant :
un piston (34) comportant une extrémité conique (36), une pointe de l'extrémité conique étant au niveau de l'extrémité distale du piston et s'évasant en un diamètre qui est égal ou supérieur à celui du diamètre interne du tube,
**caractérisé en ce que** le moyen (30) destiné à rouler l'extrémité du tube comprend en outre :
un élément de couverture (40) s'étendant sur le piston (34) et mobile avec le piston et séparément par rapport à celui-ci ; et
un moyen (60) pour faire avancer le piston et l'élément de couverture vers le tube,
dans lequel l'élément de couverture (40) est pourvu d'un renfoncement (42) sur sa surface interne, dimensionné pour attacher un manchon (S), le manchon (S) étant dimensionné pour s'ajuster sur une extrémité roulée du tube (T), fixant solidement celui-ci ;
**caractérisé en outre en ce que** le tube est un tube souple (T).

2. Appareil selon la revendication 1, **caractérisé en ce qu'**avant utilisation, l'élément de couverture (40) est positionné au même niveau qu'une extrémité proximale de l'extrémité conique ou légèrement derrière celle-ci.

3. Appareil selon la revendication 1 ou la revendication 2, **caractérisé en ce que** le moyen (60) pour faire avancer le piston et l'élément de couverture vers le tube est adapté pour déplacer initialement les deux composants (30, 40) ensemble, puis pour déplacer l'élément de couverture (40) tout en conservant la position du piston par rapport au tube.

4. Appareil selon une quelconque revendication précédente, **caractérisé en ce que** le moyen (10) destiné à retenir un tube souple et le moyen (30) destiné à rouler l'extrémité du tube sont fixés sur une base (2).

5. Appareil selon une quelconque revendication précédente, **caractérisé en ce que** le moyen (60) pour faire avancer l'extrémité conique, le piston et l'élément de couverture est actionné manuellement.

6. Appareil selon l'une quelconque des revendications 1 à 4, **caractérisé en ce que** le moyen (60) pour faire avancer l'extrémité conique, le piston et le manchon est automatisé.

7. Appareil selon une quelconque revendication précédente, **caractérisé en ce que** l'extrémité conique (36) de l'ensemble de piston (34) et l'élément de couverture (40) peuvent être remplacés par des alternatives de différentes tailles.

8. Appareil selon une quelconque revendication précédente, **caractérisé en ce que** l'extrémité conique (36) s'évase vers l'extérieur avec un évasement croissant de sa pointe à son point le plus large où elle rencontre une tige du piston.

9. Appareil selon une quelconque revendication précédente, **caractérisé en ce que** l'élément de couverture est un cylindre ouvert.

10. Appareil selon l'une quelconque des revendications précédentes, **caractérisé en ce que** la longueur du rouleau formé est de 80 à 120 % du diamètre externe du tube souple.

11. Kit comprenant l'appareil selon l'une quelconque des revendications 1 à 10, ainsi qu'une pluralité de manchons (S), dimensionnés pour un ajustement serré avec une longueur d'extrémité roulée.

12. Procédé de fourniture d'une extrémité roulée d'un tube (T), le procédé comprenant les étapes suivantes :
le support d'une longueur du tube,
l'insertion d'une partie conique dans l'extrémité du tube, jusqu'à ce que le tube s'étende au-delà de la partie conique, créant une extrémité évasée,
**caractérisé en ce que** le procédé comprend en outre le support de l'extrémité roulée avec un manchon (S) en
repoussant l'extrémité évasée sur elle-même en utilisant manchon maintenu par un élément de couverture s'étendant sur la partie conique évasée, donnant lieu à une extrémité roulée du tube supportée par le manchon ;
et dans lequel le tube est un tube souple (T).

13. Procédé selon la revendication 12, **caractérisé en ce qu'**il comprend une étape supplémentaire suivante
l'ajustement initial d'un support de tubulure (TS) adjacent à l'extrémité du tube souple (T), espacé de l'extrémité par la longueur de tubulure à enrouler.

14. Procédé selon la revendication 13, **caractérisé en ce qu'**il comprend en outre une étape finale suivante
la poussée du manchon (S) sur l'extrémité roulée pour venir en prise avec un support de tube (TS).

15. Procédé selon l'une quelconque des revendications 12 à 14 utilisant l'appareil selon l'une quelconque des revendications 1 à 10.
